# EUROPEAN PATENT SPECIFICATION

(11) **EP 4 143 096 B1**
(45) Date of publication and mention of the grant of the patent: **01.10.2025**
(21) Application number: 21796374.3
(22) Date of filing: 30.04.2021
(51) Int. Cl.: B29C 49/00, B29C 49/12, B65D 1/02, B65D 79/00, C08L 67/02, B29C 49/06, B29K 67/00, B29K 105/26, B29L 31/00

(54) **LIGHT-WEIGHT HOT-FILL CONTAINER AND METHODS FOR MAKING THE SAME**
LEICHTER HEISSFÜLLBEHÄLTER UND VERFAHREN ZUR HERSTELLUNG DAVON
RÉCIPIENT LÉGER À EMBOUTEILLAGE À CHAUD ET SES PROCÉDÉS DE FABRICATION

(30) Priority: 30.04.2020 US 202063017923 P
(43) Date of publication of application: 08.03.2023
(73) Proprietor: PepsiCo, Inc., Purchase, New York 10577 (US); Covation Inc., Newark, Delaware 19713 (US)
(72) Inventor: BHAT, Advait, New York 10532 (US); JOSHI, Anup, New York 10532 (US); SEQUEIRA, Clarence, New York 10532 (US); DUNCAN, Andrew, Jay, Wilmington, Delaware 19803 (US)
(74) Representative: Maiwald GmbH
(86) International application number: PCT/US2021/030188
(87) International publication number: WO 2021/222760

(56) References cited:
- WO-A1-2018/224652
- US-A1- 2002 090 473
- US-A1- 2002 177 686
- US-A1- 2003 001 315
- US-A1- 2003 031 814
- US-A1- 2003 222 047
- US-A1- 2014 080 962
- US-A1- 2018 141 260
- ANONYMOUS: "Polyethylene 2,5-furandicarboxylate", WIKIPEDIA, pages 1 - 2, XP093003378, Retrieved from the Internet <URL:https://en.wikipedia.org/wiki/Polyethylene_2,5-furandicarboxylate> [retrieved on 20221130]

## Description

### BACKGROUND

### Field

The described embodiments relate generally to polymer compositions for use in preforms and beverage containers. The polymer compositions may have increased recycled content and may increase strength of the preforms and beverage containers.

WO 2018/224652 A1 describes a preform for producing a plastic container in a blow moulding method, comprising an elongated, tube-like preform body, which is formed so as to be closed at the one longitudinal end thereof and, at the other longitudinal end thereof, has a neck section having a pouring opening. The preform is produced from recycled PET and aliphatic furanoate, wherein the recycled PET has a maximum of.wt% of a mixture of isophthalic acid and diethylene glycol, wherein the proportion of isophthalic acid is no higher than.wt%, and the proportion of diethylene glycol is no higher than.wt%, wherein all the percentages by weight are based on the total weight of the preform. Turbidity of the preform, measured in accordance with ASTM Dis less than%, as a result of the admixture of the aliphatic furanoate.

US 2003/001315 A1 describes articles made of polyester, preferably polyethylene terephthalate (PET), having coated directly to at least one of the surfaces thereof one or more layers of thermoplastic material with good gas-barrier characteristics, and novel methods of making such articles. Preferably the barrier-coated articles take the form of preforms coated by at least one layer of barrier material and the containers blow-molded therefrom. Such barrier-coated containers are preferably of the type to hold beverages such as soft drinks, beer or juice. The preferred barrier materials have a lower permeability to oxygen and carbon dioxide than PET as well as key physical properties similar to PET. The materials and methods provide that the barrier layers have good adherence to PET, even during and after the blow molding process to form containers from preforms. Preferred barrier coating materials include poly(hydroxyamino ethers). In one preferred method, preforms are injection molded then barrier-coated immediately thereafter.

US 2003/031814 A1 describes plastic preforms and bottles, preferably comprising polyethylene terephthalate (PET), in which the materials in the neck, neck finish and/or neck cylinder is at least partially in the crystalline state and the body is primarily in the amorphous or semi-crystalline state. This structure in a preform enables the preform to be easily blow molded by virtue of the amorphous material in the body, while being able to have dimensional stability in hot-fill applications. In addition, the amorphous inner surface of the neck finish stabilizes the post mold dimensions allowing closer molding tolerances than other crystallizing processes. On the other side, the crystallized outer surface supports the amorphous structure during high temperature filling of the container. Physical properties are also enhanced as a result of this unique crystalline/amorphous structure.

US 2002/177686 A1 describes: Process for controlling the change of intrinsic viscosity and transesterification during solid stating of a polyethylene terephthalate (PET) and polyethylene naphthalate (PEN) blend, with an effective amount of an ethylene glycol compound. The process enables the production of a copolymer based on predefined initial and final IV's and final transesterification level, by varying the solid-stating time and/or effective amount of ethylene glycol. In one embodiment, a relatively greater amount of post-consumer PET (e.g.,%) having an IV of on the order of.72-0.is incorporated in the blend to provide a final IV on the order of.80-0.and a moderate, controlled level of transesterification; the blend is used to injection mold a sleeve layer of a preform. In another embodiment, a substantially transparent neck finish for a preform is made from a PEN/PET blend having an amount of ethylene glycol which enables substantial transesterification, without excessive increase in IV.

US 2018/141260 A1 describes processes for producing lightweight polyethylene terephthalate bottles that retain good barrier properties against the permeation of oxygen, carbon dioxide and/or water vapor. The use of relatively small amounts of polyethylene furandicarboxylate during the formation of the PET bottles can produce a bottle having the required barrier properties and result in the use of less material.

US 2014/080962 A1 describes a nanocomposite material that comprises polyethylene terephthalate (PET) as a base polymer and a nanoparticle that increases the strength of the base polymer.

### BRIEF SUMMARY

Some embodiments are directed to a bottle for a hot-fill beverage comprising a polymer blend comprising a first polymer and a second polymer. The first polymer may be polyethylene terephthalate and the second polymer may be one of polyethylene furanoate or polyethylene naphthalate. The bottle may include a shoulder portion and a sidewall. The polyethylene terephthalate may include at least 50% recycled polyethylene terephthalate. The polymer blend may be made of at least 50% recycled material. In some embodiments, the polymer blend may be made of at least 80% recycled material. The polymer blend may be 100% recyclable.

In any of the various embodiments disclosed herein, the second polymer is present in an amount from 5% by weight to 15% by weight of the bottle. In any of the various embodiments disclosed herein, the second polymer is present in an amount from 5% by weight to 10% by weight of the bottle. In any of the various embodiments disclosed herein, the second polymer is present in an amount of 7% by weight of the bottle.

In any of the various embodiments disclosed herein, the bottle is a monolayer bottle.

In any of the various embodiments disclosed herein, the bottle has a top-load capacity of at least 9 kg. In any of the various embodiments disclosed herein, the bottle has a top-load capacity of at least 11 kg.

In any of the various embodiments disclosed herein, the sidewall has a thickness of less than or equal to 0.4 mm.

In any of the various embodiments disclosed herein, the volume of the bottle shrinks by less than 3% during a hot-fill process. In any of the various embodiments disclosed herein, the volume of the bottle shrinks by less than 2% during a hot-fill process.

In any of the various embodiments disclosed herein, the second polymer is present in an amount of 7% by weight of the bottle, the second polymer is polyethylene furanoate, and the bottle has a crystallinity of 25%.

In any of the various embodiments disclosed herein, a stiffness of the sidewall is at least 10% greater than a sidewall of a substantially identical container except without the second polymer.

In any of the various embodiments disclosed herein, the bottle further comprises graphene in an amount of 0.05% by weight of the bottle to 5% by weight of the bottle.

Some embodiments are directed to a preform for a beverage container comprising a polymer blend comprising a first polymer and a second polymer. The first polymer may be polyethylene terephthalate and the second polymer may be one of polyethylene furanoate or polyethylene naphthalate. The preform may comprise a reheat agent. The preform may be a monolayer blend. The second polymer may be present in a ratio of from 5% by weight to 15% by weight of the preform. The first polymer may comprise at least 50% recycled material. The polymer blend may be fully recyclable.

In any of the various embodiments disclosed herein, the second polymer is present in a ratio from 5% by weight to 10% by weight of the preform. In any of the various embodiments disclosed herein, the second polymer is present in a ratio of 7% by weight of the preform.

In any of the various embodiments disclosed herein, the second polymer is polyethylene furanoate.

In any of the various embodiments disclosed herein, the second polymer is polyethylene naphthalate.

In any of the various embodiments disclosed herein, the preform may be used to form a bottle having a shoulder portion and a body portion. In any of the various embodiments disclosed herein, the bottle may have a top-load capacity of at least 11 kg.

Some embodiments are directed to a method for making a beverage container for a hot-fill process. The method may comprise heating a preform and blowing a gas into the preform to form a bottle. The preform may comprise a blend of a first polymer and a second polymer. The first polymer may be polyethylene terephthalate, and the second polymer may be one of polyethylene furanoate or polyethylene naphthalate. The bottle may be clear and fully recyclable.

In any of the various embodiments disclosed herein, the blend further comprises a reheat agent.

In any of the various embodiments disclosed herein, the second polymer is present in a ratio of from 5% by weight to 15% by weight of the beverage container.

In any of the various embodiments disclosed herein, the second polymer is polyethylene furanoate. In any of the various embodiments disclosed herein, the second polymer is polyethylene naphthalate.

In any of the various embodiments disclosed herein, the blend is made of at least 50% recycled materials. In any of the various embodiments disclosed herein, the blend is made of at least 80% recycled materials.

In any of the various embodiments disclosed herein, the method further comprises filling the bottle with a beverage at a temperature of 85 °C to 90 °C and capping the bottle. In any of the various embodiments disclosed herein, the method further comprises cooling the capped container.

Some embodiments are directed to a method of making a perform comprising blending a first polymer and a second polymer, the first polymer comprising polyethylene terephthalate, and the second polymer comprising one of polyethylene furanoate or polyethylene naphthalate, extruding the blend to form a monolayer cube blend, and molding the monolayer cube blend to form a preform. In some embodiments, the preform comprises at least 50% recycled materials.

In any of the various embodiments disclosed herein, the blending further comprises blending a reheat agent.

In any of the various embodiments disclosed herein, the second polymer is polyethylene furanoate.

In any of the various embodiments disclosed herein, the second polymer is polyethylene naphthalate.

### BRIEF DESCRIPTION OF THE DRAWINGS/FIGURES

FIGS. 1A and 1B illustrate an exemplary hot-fill container according to some embodiments.
FIG. 2 illustrates another exemplary hot-fill container.
FIG. 3 illustrates an exemplary preform according to some embodiments, from which the containers of FIGS. 1A and 2 may be made.
FIG. 4 illustrates a polymer blend according to some embodiments, from which the preform of FIG. 3 and the containers of FIGS. 1A and 2 may be made.
FIG. 5 is a chart showing sidewall stiffness versus recycle content.
FIG. 6 is a flow chart for a process according to some embodiments.
FIG. 7 illustrates biaxial stretching of exemplary samples of containers according to some embodiments.
FIG. 8 is a graph of normalized elastic modulus at various stretch ratios according to some embodiments.
FIG. 9 is a graph of normalized elastic modulus at different temperatures.

### DETAILED DESCRIPTION

Hot-fill containers are frequently used in the beverage industry for various applications, such as hot-filling of juices, fruit-based beverages, vegetable-based beverages, energy drinks, sports drinks, and others. Hot-filling methods may reduce production times and extend shelf-life of beverages. But after filling, the contents of the hot-fill container cool, creating a partial vacuum that can put strain on the container and lead to deformation. Accordingly, hot-fill containers may have increased wall stiffness to counter this deformation. Higher wall stiffness is possible because lower copolymer content in hot-fill commercial resins facilitates higher crystallinity during the blow-molding process. But this increase in wall stiffness is also complemented by greater wall thickness and results in containers that are undesirably heavier than carbonated soft drink containers or water containers.

Recycled PET ("rPET") is typically used for making carbonated soft drink or water containers. Recycled PET containers may include a higher copolymer content. But hot-fill containers with rPET content may typically lower the crystallinity of the hot-fill container, as recycled content effectively increases the copolymer content, thereby suppressing crystallinity in bottle walls. This can create challenges during hot filling because the crystallinity levels help ensure that the container maintains its shape during the elevated filling temperatures of a hot-fill process. If crystallinity levels are suppressed, the resulting container may not be as strong as desired or may deform at the elevated temperatures required for hot filling. For example, increased recycled content may undesirably reduce sidewall stiffness or rigidity. Accordingly, containers with sidewalls having a higher recycled content-and corresponding lower crystallinity-may be more prone to distortion.

Further, some existing compositions used to add recycled content to hot-fill containers may make the containers prone to discoloration compared to virgin PET (i.e., not recycled PET) containers. Other alternatives include laminated or multilayered preforms and containers, but these techniques may increase cost, complexity, weight, and amount of materials required.

Accordingly, there is a need for a hot-fill container that has a high recycled content and is fully recyclable. Further, there is a need for a hot-fill container with these recycle characteristics that does not distort during hot filling.

Using a polymer composition according to embodiments discussed herein, it is possible to increase the recycled content and reduce the weight of hot-fill containers relative to a container made of only polyethylene terephthalate ("PET") while maintaining strength of the container. Specifically, polymer blends comprising PET and a second polymer (e.g., polyethylene furanoate ("PEF") or polyethylene naphthalate ("PEN")) and/or an additive (e.g., nanoclays, graphene, or boron nitride) can be used to create a lighter weight, fully recyclable hot-fill container without sacrificing wall stiffness or transparency. Such containers may include a reheat agent that allows for improved uniformity in wall thickness. Further, these containers may be produced on existing equipment used for hot-filling processes. In some embodiments, the polymer blend comprises PET and a second polymer (e.g., PEF or PEN). In some embodiments, the polymer blend comprises PET and a second compound (e.g., nanoclays, graphene, or boron nitride).

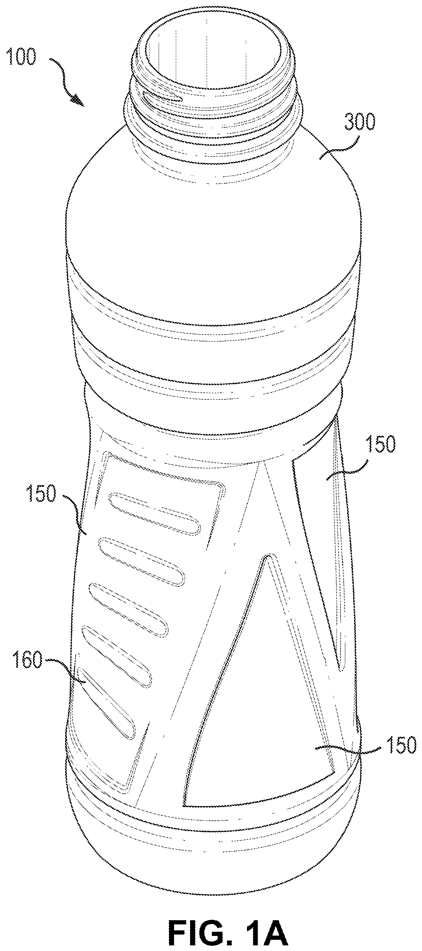

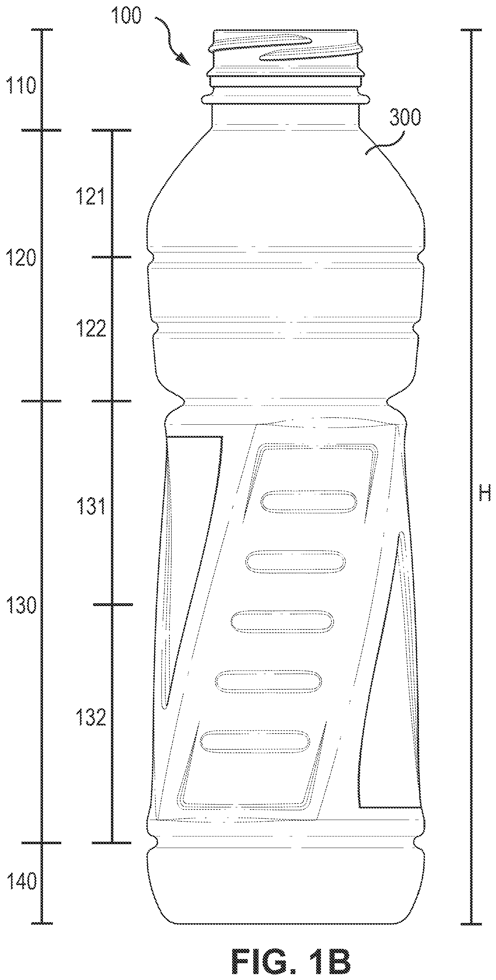

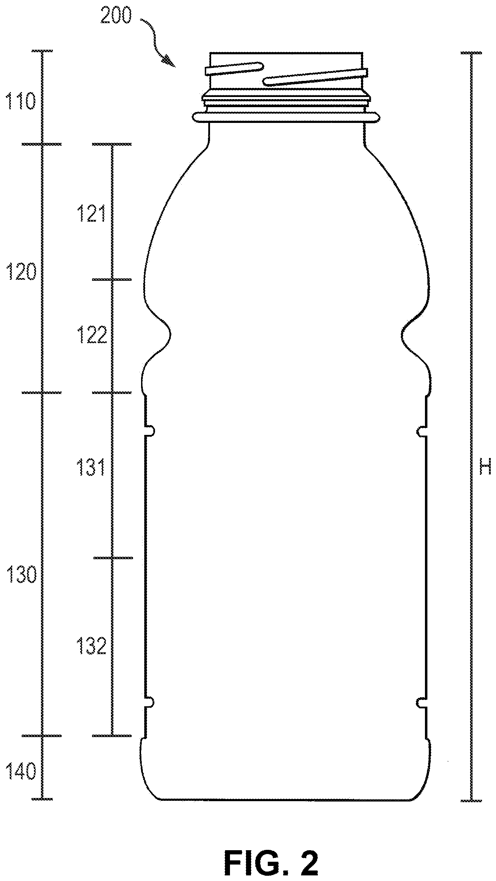

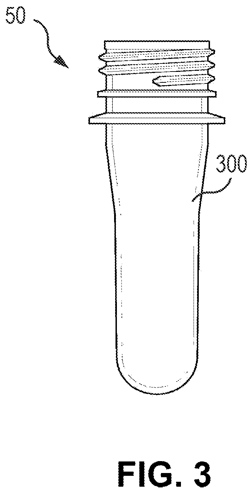

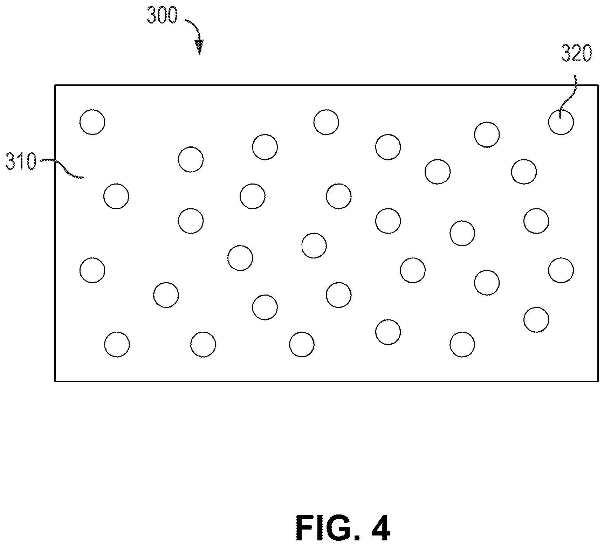

In some embodiments a hot-fill container (e.g., container 100 or 200) is made of a polymer blend. FIGS. 1A and 1B show an exemplary hot-fill container 100. FIG. 2 shows another exemplary hot-fill container 200. Containers 100 and 200 may be made using a blow molding process using a preform. FIG. 3 shows an exemplary preform 50 (e.g., from which container 100 or 200 may be made). Preform 50 may be made of a polymer composition (e.g., polymer blend 300) comprising two or more polymers, and thus a resultant container (e.g., container 100 or 200) formed from preform 50 may have the same composition. Polymer blend 300 is represented in FIG. 4 and may include first polymer 310 and second component 320. Preform 50 may be made by injection molding polymer blend 300 to form a preform or by any other suitable means for making a preform from polymer blend 300. In some embodiments, the preform is a monolayer blend of polymer blend 300.

According to some embodiments, a polymer composition (e.g., polymer blend 300) is used to create a preform (e.g., preform 50), and the preform may be used to form a hot-fill beverage container (e.g., container 100 or 200).

Container 100 or 200 may include neck portion 110 that includes an opening for hot-filling. The opening may have a diameter of at least 35 mm (e.g., at least 40 mm). In some embodiments, the opening has a diameter of 38 mm. In some embodiments, the opening has a diameter of 43 mm. This opening size is larger than typical bottles for carbonated soft drink (CSD) or water, which typically have an opening of about 28 mm. This larger opening size allows for the hot-fill container to be filled without the filling equipment contacting the opening or neck portion 110.

Container 100 or 200 may also include a lower comonomer content compared to CSD or water bottles. For example, a typical CSD or water bottle has a comonomer content of greater than 5 mol%. But higher comonomer may slow crystallinity formation. Slower crystallinity formation can be more detrimental to a hot-fill bottle as compared to a CSD bottle because it can reduce stiffness of the bottle walls, correspondingly reducing their ability to withstand internal pressure reduction (e.g., incident to cooling after filling) without deforming. Accordingly, container 100 or 200 may be a hot-fill bottle with a comonomer content of less than or equal to 5 mol% (e.g., less than 5 mol% or less than 3 mol%). In some embodiments, comonomer content of container 100 or 200 is less than 5 mol%.

Container 100 or 200 may also include one or more vacuum panels 150 and/or one or more ribs 160 for accommodating changes in pressure as the hot-filled contents cool. Typical CSD or water bottles do not include ribs or vacuum panels because such containers are not hot-filled, and will have a neutral or positive internal pressure. Container 100 or 200 may also include a flat base. In contrast, typical CSD or water bottles include feet on the base.

Polymer blend 300 may include two or more polymers (e.g., first polymer 310 and second component 320) blended together. First polymer 310 may be PET, and second component 320 may be a polymer (e.g., polyethylene furanoate ("PEF") or polyethylene naphthalate ("PEN")) or another compound (e.g., nanoclays, graphene, or boron nitride). In some embodiments, first polymer 310 is PET and second component 320 is PEF. In some embodiments, first polymer 310 is PET and second component 320 is PEN. In some embodiments, second component 320 includes both a polymer (e.g., PEF or PEN) and another compound (e.g., nanoclays, graphene, or boron nitride).

The addition of second component 320 (e.g., PEF or PEN) may increase the stiffness of the composition when used in a beverage container (e.g., a hot-fill container), compared to a container made of only PET. The addition of second component 320 may increase the stiffness, for example, if the second polymer has a higher glass transition temperature (T_{g}) and/or a higher modulus. This is because adding a second polymer affects the overall stiffness of the polymer matrix. In some embodiments second component 320 is a polymer (e.g., PEF or PEN) and has a glass transition temperature of at least 90 °C (e.g., at least 95 °C, at least 100 °C, at least 105 °C, or at least 110 °C). As discussed in more detail below, this can allow for production of thinner and lighter weight bottles that maintain the same strength as conventional bottles (e.g., 100% PET bottles) or can allow for increased bottle strength without increasing thickness or weight of the bottle. This is illustrated in the examples below. In some embodiments, the container 100 or 200 may have a top-load capacity of at least 9 kg (e.g., at least 11 kg or at least 13 kg) and a wall thickness of less than or equal to 0.5 mm (e.g., less than or equal to 0.4 mm or less than or equal to 0.3 mm).

Second component 320 (e.g., PEF or PEN) may be present in the blend in an amount, for example, from 0.05% by weight to 15% by weight of polymer blend 300. In some embodiments, the second polymer is present in an amount from 5% by weight to 15% by weight, from 6% by weight to 14% by weight, from 7% by weight to 13% by weight, from 8% by weight to 12% by weight, from 9% by weight to 11% by weight, and all ranges and sub-ranges between the foregoing values having any two of the above-listed weight percentage values as endpoints, including the endpoints. In some embodiments, the second polymer is present in an amount from 5% by weight to 10% by weight of polymer blend 300. In some embodiments, the second polymer is present in an amount of 7% by weight of polymer blend 300.

In some embodiments, second component 320 comprises a polymer (e.g., PEF or PEN) present in an amount from 4% by weight to 10% by weight of polymer blend 300 (e.g., 7% by weight). In some embodiments, second component comprises an additive (e.g., nanoclays, graphene, boron nitride) present in an amount from 0.05% by weight to 5% by weight (e.g., 0.25% by weight to 3% by weight, 0.5% by weight to 1% by weight) of polymer blend 300. In some embodiments second component comprises an additive present in an amount of 0.5% by weight of polymer blend 300.

First polymer 310 (e.g., PET) and second component 320 (e.g., PEF or PEN) may be combined using any suitable methods for blending polymers, including blending, mixing, or compounding the first polymer and the second polymer. In some embodiments, the first polymer and the second polymer are melt blended to form the polymer composition. The mixture may be a cube blend (also known as a salt and pepper blend) formed via melt blending in an extruder. FIG. 4 illustrates a cube blend, which includes dispersed domains of second component 320 (e.g., PEF or PEN) in first polymer 310 (e.g., PET).

Using the polymer compositions disclosed herein may allow for use of more recycled content in the hot-fill container without compromising the strength of the container or the clarity of the polymer composition when compared to a container made of only PET. This is illustrated in examples 6 and 7 below. As used herein, "recycled content" means the percentage of the finished bottle made of recycled materials. In some embodiments, the hot-fill container (e.g., container 100 or 200) may have a recycled content of at least 50% recycled materials (e.g., at least 80% recycled material or at least 95% recycled material). In some embodiments, the hot-fill container is made of 100% recycled materials.

Hot-fill containers (e.g., container 100 or 200) made from the polymer compositions disclosed herein have many beneficial properties, including improved barrier properties, increased wall stiffness, and increased shelf life compared to 100% PET containers or other polymer-polymer blend (e.g., nylon-PET) containers. Accordingly, these polymer compositions can be used to increase shelf life compared to other polymer-polymer blends (e.g., nylon-PET). Further, the shelf life of a hot-fill container may decrease as recycled content increases.

Additionally, these polymer compositions can be used to increase wall stiffness relative to containers made of only PET or containers with other polymer-polymer blends (e.g., nylon-PET). These polymer compositions can be used to maintain wall stiffness and shelf life while decreasing the weight of the container and the thickness of the walls. The polymer compositions can also be used to increase wall stiffness while also decreasing the weight of the container and the thickness of the walls. Specifically, in some embodiments, adding a second polymer such as PEF or PEN decreases permeability while increasing the wall stiffness compared to containers made of only PET. This combination of PET and a second polymer (e.g., PEF or PEN) allows for several options when producing hot-fill containers. In some embodiments, PEF or PEN is added to PET to create a bottle that will extend shelf life of the contents and increase wall stiffness compared to containers made of only PET. In some embodiments, a container (e.g., container 100 or 200) that includes PET and PEF or PEN may allow for a weight reduction without a corresponding reduction in wall stiffness. This is illustrated in Examples 6 and 7, which show similar or increased wall stiffness (measured by axial elastic modulus and hoop elastic modulus) for blended containers compared to 100% PET containers. Elastic modulus measures a material's resistance to being deformed elastically when stress is applied. A higher elastic modulus corresponds to a material that is stiffer and thus more resistant to deformation.

In some embodiments, the polymer composition (e.g., polymer blend 300) may allow for a reduction in weight of 1% to 20% (e.g., 3% to 18%, 5% to 15%, or 10% to 15%). In some embodiments, the polymer composition may allow for a reduction in weight of 10% to 15%. In some embodiments, the container (e.g., container 100 or 200) may be 10% to 15% lighter than a substantially identical container but without the PEF or PEN (e.g., a container made of only PET). In some embodiments, the container (e.g., container 100 or 200) may be 10% to 15% lighter but have the same or greater wall stiffness as a substantially identical container but without the PEF or PEN. For example, as shown in Example 6, Bottle F (93% PET and 7% PEN) had similar or increased wall stiffness compared to Bottle E (100% PET), yet Bottle F was 13% lighter than Bottle E. Likewise, Bottle G (50% rPET) had similar or increased wall stiffness compared to Bottle E (100% PET), yet Bottle G was 12% lighter than Bottle E.

Polymer blends used to increase shelf life may include a nylon-PET blend. But nylon-PET blends are not fully recyclable and tend to discolor after a relatively short period of time (e.g., 10 or more days). Such discoloration may make the container less desirable to a consumer. In some embodiments, the polymer composition (e.g., polymer blend 300) may be clear and may remain clear for the shelf-life of the contents of the hot-fill container.

The polymer blends according to some embodiments may be used in a hot-fill container (e.g., container 100 or 200) for a beverage. The polymer compositions (e.g., polymer blend 300) disclosed herein may be used to create any suitable beverage container (e.g., container 100 or 200). In some embodiments, container 100 or 200 is a hot-fill container. Containers 100 and 200 may each include neck portion 110, shoulder portion 120, body portion 130, and base portion 140. Container 100 or 200 may have a height H that extends from the top of neck portion 110 to the bottom of base portion 140. Shoulder portion 120 may include upper shoulder portion 121 and lower shoulder portion 122. Body portion 130 may include upper body portion 131 and lower body portion 132. Container 100 or 200 may be molded by a preform (e.g., preform 50) made of polymer blend 300. In some embodiments, container 100 or 200 is a monolayer container.

Compared to containers made with 100% PET, containers having increased recycled content generally are more prone to distortion. For example, high recycled content may result in lower crystallinity of the container, which in turn decreases the strength of the container. However, the addition of second component 320 may improve crystallinity of a container having an increased recycled content. For example, the addition of second component 320 may induce nucleation which in turn increases crystallinity. In some embodiments, container 100 or 200 made of the polymer composition disclosed herein (e.g., polymer blend 300) has a crystallinity of at least 25%, (e.g., at least 27%, at least 30%, at least 31%, at least 32%, at least 33%, or at least 34%) at any point on the container. In some embodiments, container 100 or 200 has a crystallinity of 25%. The crystallinity of container 100 or 200 may be increased by 1% to 10% (e.g., 3% to 7%) compared to a substantially identical container but without second component 320. In some embodiments, thermal treatments may facilitate thermal crystallinity and improve wall rigidity to withstand the deformation during a hot-fill process.

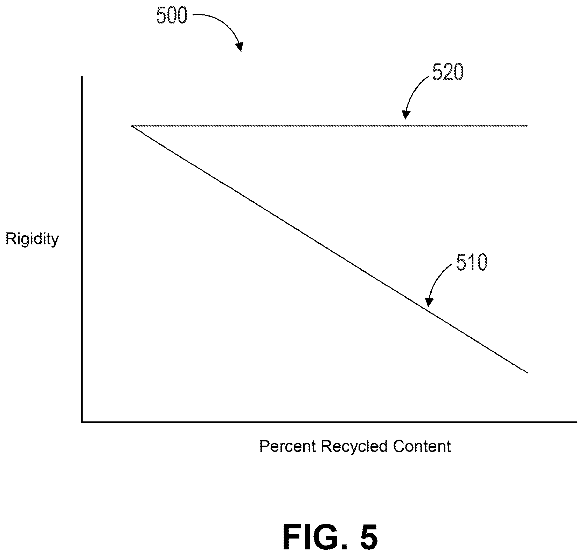

As discussed below, strength of the container may be assessed by measuring the top-load capacity or the rigidity of the container at various points. FIG. 5 illustrates chart 500 showing container rigidity versus percent recycled content. Line 510 illustrates the general relationship between rigidity and percent recycled content for typical containers. Typically, as the percent recycled content increases, the rigidity of the container decreases. Line 520 conceptually illustrates the improved relationship between rigidity and percent recycled content for containers disclosed herein formed of polymer blend 300. For containers disclosed herein (e.g., container 100 or 200 comprising polymer blend 300), the container may maintain rigidity as the percent recycled content increases, as illustrated in the examples 6 and 7 below.

A measure of strength of a beverage container is the top-load capacity, which is a measure of how much downward force the container can support without buckling. A high top-load capacity will help ensure that the container does not fail during filling, capping, transportation, or when stored. Container 100 or 200 may have a top-load capacity that is greater than or equal to the top-load capacity of a substantially identical container but without the second polymer (e.g., PEF or PEN). For example, the top-load capacity of container 100 or 200 may be 10% greater to 30% greater (e.g., 15% greater to 25% greater) than the top-load capacity of a substantially identical container but without the second polymer (e.g., PEF or PEN). In some embodiments, container 100 or 200 has a top-load capacity of at least 9 kg (e.g., at least 11 kg or at least 13 kg).

Another measure of strength of a beverage container is the rigidity of the container at various points. This is measured by applying force at a given location until the container dents irreversibly. Sidewall rigidity may be increased with the addition of second component 320. For example, sidewall rigidity may be increased by 10% to 30% (e.g., 15% to 25%) compared to a substantially identical container but without the second component. One way to assess sidewall rigidity is by measuring sidewall deflection. Adding second component 320 may allow for equal or greater sidewall rigidity at lower container weights. The rigidity may be measured at various positions along the container. For example, in some embodiments, the rigidity is measured at upper shoulder portion 121, lower shoulder portion 122, upper body portion 131, lower body portion 132, and base portion 140. In some embodiments, the rigidity of container 100 or 200 at upper shoulder portion 121 is at least 6 kg (e.g., at least 9 kg or at least 11 kg). In some embodiments, the rigidity of container 100 or 200 at lower shoulder portion 122 is at least 9 kg (e.g., at least 11 kg or at least 13 kg). In some embodiments, the rigidity of container 100 or 200 at upper body portion 131 is at least 3.6 kg (e.g., at least 4.5 kg or at least 5.4 kg). In some embodiments, the rigidity of container 100 or 200 at lower body portion 132 is at least 3.6 kg (e.g., at least 4 kg or at least 4.5 kg). In some embodiments, the rigidity of container 100 or 200 at base portion 140 is at least 6.8 kg (e.g., at least 8.2 kg, at least 9 kg, or at least 10 kg).

Rigidity or stiffness can also be assessed using a sidewall deflection test. The addition of second component 320 may increase the normalized sidewall deflection (lb/mm), which corresponds to increased rigidity.

Another methodology to increase bottle wall stiffness of a PET container is blending with nanomaterials such as nanoclays, graphene, boron nitride etc. Well dispersed nanomaterials act as reinforcing agent and improve mechanical properties of PET including stiffness. Some nanomaterials like graphene can also act as a reheat agent and improve thermal conductivity of PET preforms. In some embodiments, a reheat agent is added to the polymer composition. In some embodiments, graphene is added as a reheat agent. In some embodiments, the addition of graphene improves the stiffness of the container.

When used, a reheat agent may minimize the temperature gradient within the wall of the preform during the blow-molding process. During blow-molding, the preform may be heated to a temperature higher than the glass transition temperature of the preform, which allows for deformation of the preform to take the shape of the mold. During this process, the preform is rotated and exposed to infrared lamps. As the preform rotates, a temperature gradient forms between the exterior side of the preform and the interior side of the preform. Using a reheat agent may minimize this temperature gradient such that the entire wall thickness is at substantially the same temperature. This may make more thermal energy available, and more thermal energy may increase the crystallinity during blow molding. In some embodiments, there is no temperature gradient through the wall (i.e., the entire wall thickness is at the same temperature) at least one point during blow molding.

The use of a reheat agent with polymer blend 300 can result in improved mechanical properties of the container such as those described above. Specifically, this combination allows for more uniform heat absorption, which can in turn facilitate optimal placement of the blend material. For example, optimal placement of the blend material may mean that the second polymer (e.g., PEF or PEN) is uniformly distributed in the first polymer (e.g., PET). Optimal placement of the blend material enables increased stiffness and improved performance for hot-fill containers due to the improved thermal performance discussed above.

Including a reheat agent may increase various mechanical properties of PET, including flexural strength, flexural modulus, tensile strength, Young's modulus, and elongation at break. These improved mechanical properties may be due to the stiffness and reinforcing effects of the reheat agent in the PET. Additionally, the improved mechanical properties may be due to a reinforcement-reinforcement interaction. Further, reheat agents may improve thermal stability and conductivity.

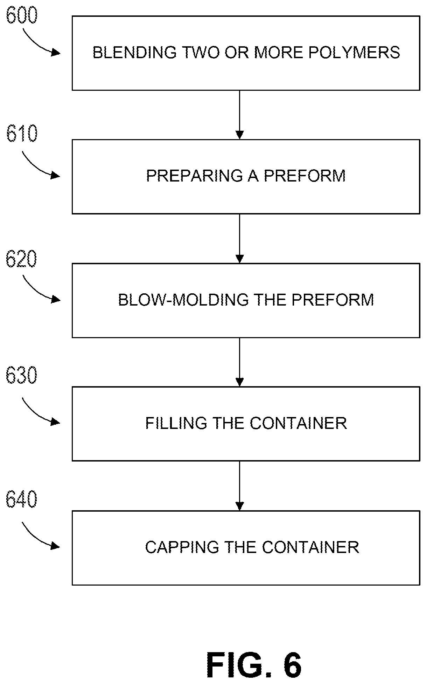

FIG. 6 shows a flow chart for a process for making a hot-fill container (e.g., container 100 or 200) according to some embodiments. At step 600, two or more polymers are blended to form polymer blend 300. In some embodiments, a reheat agent is blended with the two or more polymers at step 600, and form a part of polymer blend 300. In some embodiments polymer blend 300 may be formed from first polymer 310 (e.g., PET) and second component 320 (e.g., PEF or PEN) as disclosed above (and optionally with a reheat agent). After polymer blend 300 has been prepared, at step 610 polymer blend 300 may be formed into a preform (e.g., preform 50). In some embodiments, polymer blend 300 is injection molded to form preform 50. Then at step 620 the preform may be blow molded to form a container (e.g., in some embodiments, preform 50 is blow molded to form container 100 or 200).

During blow molding, heat may be added to the bottle wall, which can increase crystallinity of the polymer composition. In some embodiments, during blow molding heat is added until the crystallinity is at least 30% (e.g., at least 31%, at least 32%, at least 33%, or at least 34%) at any given point on the container. After blow molding, at step 630 the container may be filled. In some embodiments container 100 or 200 is filled using a hot-fill process. In some embodiments, the container is filled with a beverage at a temperature from 80 °C to 100 °C (e.g., from 85 °C to 95 °C, from 85 °C to 90 °C). In some embodiments, the container is filled with a beverage at a temperature of greater than or equal to 85 °C (e.g., greater than or equal to 90 °C). After filling, at step 640 the container may be capped and the contents cooled.

The stability of the hot-fill containers disclosed herein during hot-filling may be equal to or better than stability of a substantially identical container but without the PEF or PEN (e.g., a container made of only PET). Stability may be measured by how much the container shrinks during a hot-filling process. In some embodiments, the volume of the container shrinks by less than 3% (e.g., less than 2%) during the hot-fill process. The amount of shrinkage may also be less for container 100 or 200 compared to a substantially identical container but without the second polymer (e.g., PEF or PEN). For example, the shrinkage of container 100 or 200 may be 0.2% to 0.8% of the shrinkage of a substantially identical container but without the second polymer.

The process for making a hot-fill container disclosed herein may be integrated into existing hot-fill production facilities. In some embodiments, an existing hot-fill production line can produce at least 1000 bottles per hour (e.g., at least 1200 bottles per hour or at least 1400 bottles per hour) using the process for making a hot-fill container disclosed herein. In some embodiments, the process speed is sufficient to produce 1400 bottles per hour.

### Examples

### Example 1

In one experiment, the section weight of four hot-fill bottles was measured. Section weight is the weight of different portions of the bottle. For example, the weight of each bottle was measured at the upper shoulder, upper rib, upper body panel, lower label panel, and the base. These sections are illustrated in FIGS. 1B and 2 as upper shoulder portion 121, lower shoulder portion 122, upper body portion 131, lower body portion 132, and base portion 140. Container 100 or 200 may be molded from a preform (e.g., preform 50) made of polymer blend 300. In some embodiments, container 100 or 200 is a monolayer container. Bottle A was a control bottle made of 100% PET and having a standard wall distribution, bottle B was a control bottle made of 100% PET and having a heavy base distribution, bottle C was a bottle made of PET and 70 ppm of a reheat agent and having a standard wall distribution, and bottle D was a bottle made of PET and 70 ppm of a reheat agent and having a heavy base distribution. As used herein, "heavy base distribution" means the bottle is thicker at the base of the container compared to a standard wall distribution container. The weight of each section as a percentage of the total bottle weight is shown below in Table 1.

**Table 1**

| Bottle | Upper Shoulder (%) | Lower Shoulder (%) | Upper Body Portion (%) | Lower Body Portion (%) | Base (%) |
|---|---|---|---|---|---|
| A | 38.5 | 10.9 | 16.0 | 14.0 | 20.6 |
| B | 37.8 | 10.3 | 15.4 | 13.9 | 22.7 |
| C | 38.3 | 11.4 | 15.8 | 14.2 | 20.3 |
| D | 37.3 | 10.8 | 15.3 | 14.0 | 22.5 |

Another measure of material distribution is the thickness of the bottles at different points, which is shown in Table 2 below.

**Table 2**

| Bottle | Upper Shoulder (in) | Lower Shoulder (in) | Upper Body Portion (in) | Lower Body Portion (in) | Base (in) |
|---|---|---|---|---|---|
| A | 0.0123 | 0.0124 | 0.0146 | 0.0141 | 0.0120 |
| B | 0.0117 | 0.0118 | 0.0138 | 0.0135 | 0.0128 |
| C | 0.0127 | 0.0127 | 0.0141 | 0.0137 | 0.0123 |
| D | 0.0119 | 0.0118 | 0.0139 | 0.0136 | 0.0125 |

As shown by Tables 1 and 2, containers B and D, which both have a heavy base distribution, have a higher weight and thickness at the base and lower weights and thicknesses at the other portions of the container when compared to standard wall distribution bottles A and C.

### Example 2

In one experiment, the top-load capacity was measured for the bottles of Example 1. The top-load capacity for bottles A, B, C, and D are shown in Table 3.

**Table 3**

| Bottle | Top-Load Capacity |
|---|---|
| A | 14.3 kg |
| B | 13.3 kg |
| C | 14.4 kg |
| D | 13.7 kg |

As shown by this example, bottles with the reheat agent (bottles C and D) showed improved top-load capacity compared to the corresponding bottles without the reheat agent (bottles A and B) due to more even distribution of the materials.

### Example 3

In one experiment, the bottles of Example 1 were tested for shrinkage after hot filling. The shrinkage was measured by overall height and volume, as well as height and volume at the shoulder, lower body, and upper body of the containers. The results of these tests are shown in Table 4.

**Table 4**

| Bottle | Height Shrink (%) | Volume Shrink (%) | Lower Body Portion Shrink (%) | Upper Body Portion Shrink (%) | Upper Shoulder Shrink (%) |
|---|---|---|---|---|---|
| A | 0.24 | -1.90 | -1.04 | -1.58 | -2.24 |
| B | 0.26 | -2.21 | -0.80 | -1.97 | -2.79 |
| C | 0.20 | -1.72 | -1.27 | -1.46 | -1.71 |
| D | 0.26 | -1.93 | -0.89 | -1.75 | -2.51 |

As shown by Table 4, bottles with the reheat agent (bottles C and D) showed less overall volume shrinkage compared to the corresponding bottles without the reheat agent (bottles A and B). This indicates that the bottles with the reheat agent are more stable during hot-filling than the bottles without the reheat agent.

### Example 4

In one experiment, the bottles of Example 1 were tested for sidewall rigidity. The test applied force at a 12.7 mm deflection to the bottle at various spots until the bottle dented with no recovery. The results of these tests are shown in Table 5.

**Table 5**

| Bottle | Upper Shoulder (kg) | Lower Shoulder (kg) | Upper Body Portion (kg) | Lower Body Portion (kg) | Base (kg) |
|---|---|---|---|---|---|
| A | 8.8 | 11.6 | 5.6 | 4.2 | 8.3 |
| B | 8.4 | 11 | 5.4 | 4.0 | 9.3 |
| C | 10.9 | 11.8 | 5.9 | 4.6 | 9.5 |
| D | 8.9 | 10.5 | 5 | 4.9 | 10.2 |

As shown in Table 5, the bottles with the reheat agent showed increased sidewall rigidity at almost every position along the bottle.

### Example 5

In one experiment, the bottles of Example 1 were tested for crystallinity at various points on the container. The crystallinity of the bottle at different points are shown in Table 6.

**Table 6**

| Bottle | Upper Shoulder (%) | Lower Shoulder (%) | Upper Body Portion (%) | Lower Body Portion (%) | Base (%) |
|---|---|---|---|---|---|
| A | 33.91 | 33.78 | 33.91 | 34.22 | 33.40 |
| B | 34.18 | 33.81 | 34.32 | 34.63 | 33.71 |
| C | 33.54 | 33.51 | 34.22 | 33.30 | 32.93 |
| D | 34.35 | 32.62 | 34.15 | 33.07 | 32.22 |

As shown by these Examples, bottles made according to some embodiments may have improved top-load capacity, improved stability during a hot-filling process, and increased sidewall rigidity.

### Example 6

In one experiment, characteristics of different combinations of rPET and PET were evaluated for hot-fill containers. Bottles E-G were all 20 ounce containers with the same shape, differing only in the material, sidewall thickness, and total weight. The composition of each evaluated bottle is shown in Table 7. The elastic modulus was measured at two places for each bottle. Axial modulus was measured in the vertical direction at the body portion (e.g., body portion 130) and hoop modulus was measured in the horizontal direction at the shoulder portion (e.g., shoulder portion 120). A higher elastic modulus corresponds to a material that is stiffer and thus more resistant to deformation. The axial modulus and hoop modulus is also shown in Table 7.

**Table 7**

| Bottle | PET (wt%) | rPET (wt%) | PEN (wt%) | Normalized preform weight | Axial modulus (kpsi/gram) | Hoop modulus (kpsi/gram) |
|---|---|---|---|---|---|---|
| E | 100% | 0% | 0% | 1.00 | 17.7 | 15.8 |
| F | 93% | 0% | 7% | 0.87 | 20.3 | 11.8 |
| G | 50% | 50% | 0% | 0.88 | 19.0 | 15.1 |

The performance of each bottle was measured by determining the sidewall deflection force. The sidewall deflection was measured when the bottle was hot-filled and capped. The normalized sidewall deflection force is shown in Table 8.

**Table 8**

| Bottle | Normalized sidewall deflection (lb/mm) |
|---|---|
| E | 20.1 |
| F | 20.0 |
| G | 21.7 |

As shown in Tables 7 and 8, it is possible to add at least one of PEN or rPET to PET and reduce the weight of the bottle without sacrificing strength of the bottle. For example, comparing Bottles E and F, the addition of PEN increased axial modulus while only slightly reducing the hoop modulus. And as shown in Table 8, normalized sidewall deflection of Bottle F is similar to the normalized sidewall deflection of Bottle E.

Similar results were found for the addition of 50% rPET. For example, Bottle G (50% rPET) has an axial modulus and hoop modulus that are greater than or similar to that of Bottles E (100% PET). When comparing Bottles G (50% rPET) to Bottle E (100% PET), the normalized sidewall deflection is higher with the inclusion of rPET.

### Example 7

In one experiment, characteristics of different combinations of rPET and PET were evaluated for hot-fill containers. Bottles H and I were both 18.5 ounce containers with the same shape, differing only in the material, sidewall thickness, and total weight. Bottles H and I were a different shape than Bottles E-G in Example 6. The composition of each evaluated bottle is shown in Table 9. The elastic modulus was measured at two places for each bottle. Axial modulus was measured in the vertical direction at the body portion (e.g., body portion 130) and hoop modulus was measured in the horizontal direction at the base portion (e.g., base portion 140). The axial modulus and hoop modulus is shown in Table 9.

**Table 9**

| Bottle | PET (wt%) | rPET (wt%) | Graphene (wt%) | Normalized preform weight | Axial modulus (kpsi/gram) | Hoop modulus (kspi/gram) |
|---|---|---|---|---|---|---|
| H | 100% | 0% | 0% | 1.00 | 10.8 | 9.2 |
| I | 49.75% | 49.75% | 0.5% | 1.00 | 12.3 | 10.4 |

The performance of each bottle was measured by determining the top-load capacity and the sidewall deflection force. The top-load capacity was measured when the bottle was empty and vented (i.e., there was no cap on the bottle). The sidewall deflection was measured when the bottle was hot-filled and capped. The top-load capacity and normalized sidewall deflection force are shown in Table 10.

**Table 10**

| Bottle | Top-load capacity (lb) | Normalized sidewall deflection (lb/mm) |
|---|---|---|
| H | 119.8 | 13.91 |
| I | 96.0 | 11.73 |

As shown illustrated in Table 9, bottles with rPET with graphene showed increased axial modulus and hoop modulus.

### Example 8

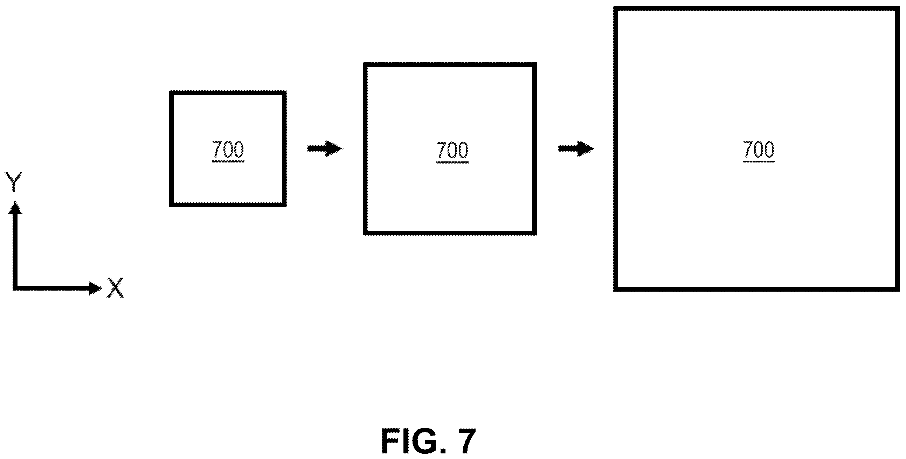

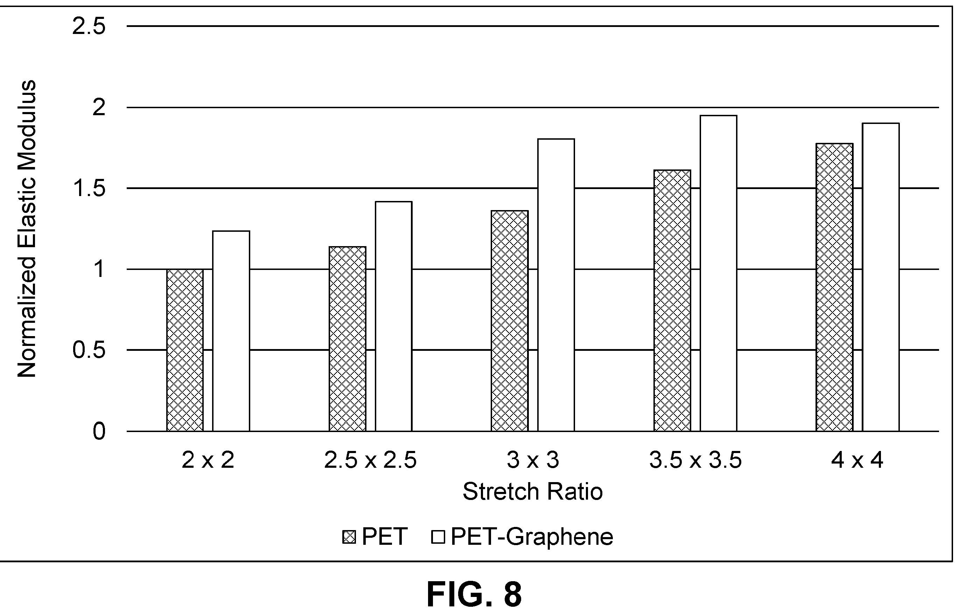

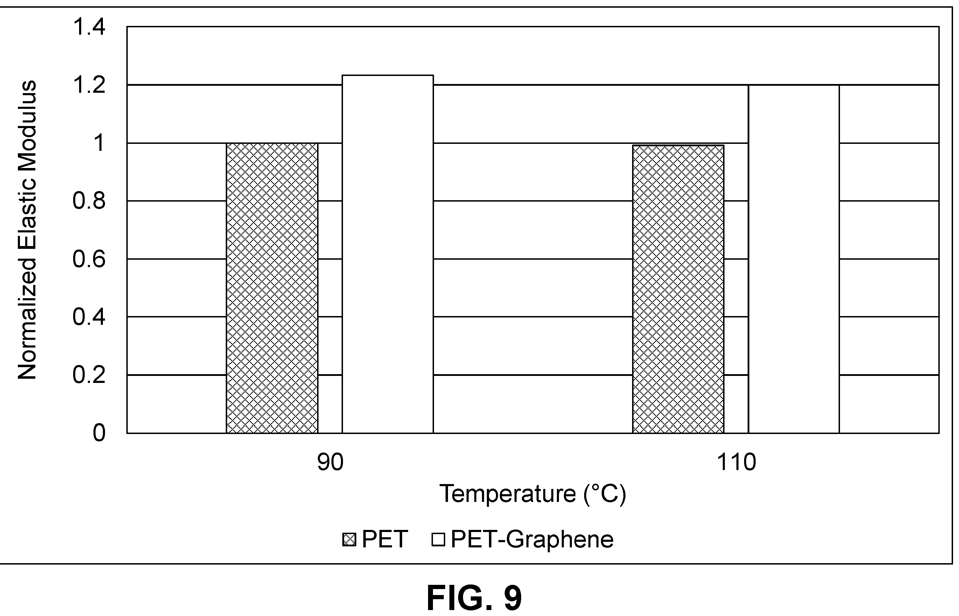

In one experiment, samples of material used to make bottles were biaxially stretched at various stretch ratios and then annealed under constraint via grips. This was done by heating the samples for 15 seconds at a specified temperature. A "2 x 2" stretch ratio means the sample was stretched in both the x-direction and y-direction such that the stretched sample was 2x the original length in both directions. FIG. 7 illustrates sample 700 being biaxially stretched. One material was 100% PET and the other material was PET with graphene. The results of this experiment are illustrated in FIGS. 8 and 9. FIG. 8 shows that a sample comprising PET with graphene consistently had a higher normalized elastic modulus compared to the 100% PET sample when stretched at various stretch ratios at a strain rate of 1 s⁻¹. FIG. 9 shows that a sample comprising PET with graphene had a higher normalized elastic modulus compared to the 100% PET sample when stretched at a stretch ratio of 3 x 3 at a strain rate of 16 s⁻¹. Thus, this experiment confirmed that elastic modulus can be increased with the inclusion of graphene.

It is to be appreciated that the Detailed Description section, and not the Summary and Abstract sections, is intended to be used to interpret the claims. The Summary and Abstract sections may set forth one or more but not all exemplary embodiments of the present disclosure as contemplated by the inventor(s), and thus, are not intended to limit the present disclosure and the appended claims in any way.

The present disclosure has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

## Claims

1. A bottle (100) for a hot-fill beverage, the bottle comprising:
a polymer blend (300) comprising a first polymer (310) and a second polymer (320), wherein:
the first polymer is polyethylene terephthalate, and
the second polymer is one of polyethylene furanoate or polyethylene naphthalate;
a shoulder portion (120); and
a sidewall (130) having a thickness of less than or equal to 0.5 mm,
wherein at least 50% of the polyethylene terephthalate is recycled polyethylene terephthalate, and
wherein the second polymer is present in an amount of 5% by weight to 15% by weight of the bottle.

2. The bottle of claim 1, wherein the second polymer is present in an amount of 5% by weight to 10% by weight of the bottle, preferably wherein the second polymer is present in an amount of 7% by weight of the bottle.

3. The bottle of claim 1, wherein the polymer blend comprises at least 80% recycled material.

4. The bottle of claim 1, wherein the bottle is a monolayer bottle, preferably wherein the sidewall has a thickness of less than or equal to 0.4 mm.

5. The bottle of claim 1, wherein the bottle has a top-load capacity of at least 9 kg.

6. The bottle of claim 1, wherein the second polymer is present in an amount of 7% by weight of the bottle,
wherein the second polymer is polyethylene furanoate, and
wherein the bottle has a crystallinity of at least 25%.

7. The bottle of claim 1, wherein a stiffness of the sidewall is at least 10% greater than a sidewall of a substantially identical container except without the second polymer.

8. The bottle of claim 1, further comprising graphene present in an amount of 0.05% by weight to 5% by weight.

9. A preform for making the bottle of claim 1, the preform comprising:
a polymer blend (300) comprising a first polymer (310) and a second polymer (320), wherein the polymer blend is a monolayer blend; and
a reheat agent,
wherein the second polymer (320) is present in a ratio of between 5% by weight of the preform and 15% by weight of the preform, and
wherein the first polymer (310) comprises at least 50% recycled material.

10. The preform of claim 9, wherein the second polymer is present in a ratio of 5% by weight of the preform and 10% by weight of the preform, preferably wherein the second polymer is present in an amount of 7% by weight of the preform.

11. A method for making a beverage container for a hot-fill process, the method comprising:
heating a preform (50), the perform comprising:
a blend (300) of a first polymer (310) and a second polymer (320), wherein the first polymer is polyethylene terephthalate, and the second polymer is one of polyethylene furanoate or polyethylene naphthalate, wherein the blend comprises at least 50% recycled materials; and
blowing a gas into the preform to form the bottle (100) of claim 1.

12. The method of claim 11, wherein the blend further comprises a reheat agent.

13. The method of claim 11, wherein the blend comprises at least 80% recycled materials.

14. The method of claim 11, further comprising:
filling the bottle with a beverage at a temperature of 85 °C to 90 °C; and
capping the bottle.

## Patentansprüche

1. Flasche (100) für ein Heißabfüllgetränk, wobei die Flasche umfasst:
ein Polymergemisch (300), das ein erstes Polymer (310) und ein zweites Polymer (320) umfasst, wobei:
das erste Polymer Polyethylenterephthalat ist, und
das zweite Polymer eines von Polyethylenfuranoat oder Polyethylennaphthalat ist;
einen Schulterabschnitt (120); und
eine Seitenwand (130), die eine Dicke von weniger als oder gleich 0,5 mm aufweist,
wobei mindestens 50 % des Polyethylenterephthalats recyceltes Polyethylenterephthalat sind, und
wobei das zweite Polymer in einer Menge von 5 Gew.-% bis 15 Gew.-% der Flasche vorliegt.

2. Flasche nach Anspruch 1, wobei das zweite Polymer in einer Menge von 5 Gew.-% bis 10 Gew.-% der Flasche vorliegt, wobei bevorzugt das zweite Polymer in einer Menge von 7 Gew.-% der Flasche vorliegt.

3. Flasche nach Anspruch 1, wobei das Polymergemisch mindestens 80 % recyceltes Material umfasst.

4. Flasche nach Anspruch 1, wobei die Flasche eine Monolayer-Flasche ist, wobei bevorzugt die Seitenwand eine Dicke von weniger als oder gleich 0,4 mm aufweist.

5. Flasche nach Anspruch 1, wobei die Flasche eine vertikale Belastbarkeit von mindestens 9 kg aufweist.

6. Flasche nach Anspruch 1, wobei das zweite Polymer in einer Menge von 7 Gew.-% der Flasche vorliegt,
wobei das zweite Polymer Polyethylenfuranoat ist, und
wobei die Flasche eine Kristallinität von mindestens 25 % aufweist.

7. Flasche nach Anspruch 1, wobei die Steifigkeit der Seitenwand mindestens 10 % größer ist als die einer Seitenwand eines im Wesentlichen identischen Behälters, der jedoch kein zweites Polymer enthält.

8. Flasche nach Anspruch 1, des Weiteren umfassend Graphen, das in einer Menge von 0,05 Gew.-% bis 5 Gew.-% vorliegt.

9. Vorformling zum Herstellen der Flasche nach Anspruch 1, wobei der Vorformling umfasst:
ein Polymergemisch (300), das ein erstes Polymer (310) und ein zweites Polymer (320) umfasst, wobei das Polymergemisch ein Monolayer-Gemisch ist; und
ein Wiedererwärmungsmittel,
wobei das zweite Polymer (320) in einem Verhältnis zwischen 5 Gew.-% des Vorformlings und 15 Gew.-% des Vorformlings vorliegt, und wobei das erste Polymer (310) mindestens 50 % recyceltes Material umfasst.

10. Vorformling nach Anspruch 9, wobei das zweite Polymer in einem Verhältnis von 5 Gew.-% des Vorformlings und 10 Gew.-% des Vorformlings vorliegt, wobei das zweite Polymer bevorzugt in einer Menge von 7 Gew.-% des Vorformlings vorliegt.

11. Verfahren zum Herstellen eines Getränkebehälters für einen Heißabfüllprozess, wobei das Verfahren umfasst:
Erwärmen eines Vorformlings (50), wobei der Vorformling umfasst:
ein Gemisch (300) aus einem ersten Polymer (310) und einem zweiten Polymer (320),
wobei das erste Polymer Polyethylenterephthalat ist und das zweite Polymer eines von Polyethylenfuranoat und Polyethylennaphthalat ist, wobei das Gemisch mindestens 50 % recycelte Materialien umfasst; und
Einblasen eines Gases in den Vorformling, um die Flasche (100) nach Anspruch 1 zu bilden.

12. Verfahren nach Anspruch 11, wobei das Gemisch des Weiteren ein Wiedererwärmungsmittel umfasst.

13. Verfahren nach Anspruch 11, wobei das Gemisch mindestens 80 % recycelte Materialien umfasst.

14. Verfahren nach Anspruch 11, des Weiteren umfassend:
Befüllen der Flasche mit einem Getränk bei einer Temperatur von 85 °C bis 90 °C; und
Verschließen der Flasche mit einem Deckel.

## Revendications

1. Bouteille (100) pour une boisson chaude, la bouteille comprenant :
un mélange de polymères (300) comprenant un premier polymère (310) et un second polymère (320), dans lequel :
le premier polymère est le polyéthylène téréphtalate, et
le second polymère est l'un parmi le polyéthylène furanoate ou le polyéthylène naphtalate ;
une partie épaulement (120) ; et
une paroi latérale (130) d'une épaisseur inférieure ou égale à 0,5 mm,
dans laquelle au moins 50 % du polyéthylène téréphtalate est du polyéthylène téréphtalate recyclé, et
dans laquelle le second polymère est présent dans une quantité de 5 % en poids à 15 % en poids de la bouteille.

2. Bouteille selon la revendication 1, dans laquelle le second polymère est présent dans une quantité de 5 % en poids à 10 % en poids de la bouteille, de préférence dans laquelle le second polymère est présent dans une quantité de 7 % en poids de la bouteille.

3. Bouteille selon la revendication 1, dans laquelle le mélange de polymères comprend au moins 80 % de matériau recyclé.

4. Bouteille selon la revendication 1, dans laquelle la bouteille est une bouteille monocouche, de préférence dans laquelle la paroi latérale a une épaisseur inférieure ou égale à 0,4 mm.

5. Bouteille selon la revendication 1, dans laquelle la bouteille a une capacité de charge par le haut d'au moins 9 kg.

6. Bouteille selon la revendication 1, dans laquelle le second polymère est présent dans une quantité de 7 % en poids de la bouteille,
dans laquelle le second polymère est le polyéthylène furanoate, et
dans laquelle la bouteille a une cristallinité d'au moins 25 %.

7. Bouteille selon la revendication 1, dans laquelle une rigidité de la paroi latérale est supérieure d'au moins 10 % à celle d'une paroi latérale d'un récipient sensiblement identique, mais dépourvu du second polymère.

8. Bouteille selon la revendication 1, comprenant en outre du graphène présent dans une quantité de 0,05 % en poids à 5 % en poids.

9. Préforme pour la fabrication de la bouteille selon la revendication 1, la préforme comprenant :
un mélange de polymères (300) comprenant un premier polymère (310) et un second polymère (320), dans laquelle le mélange de polymères est un mélange monocouche ; et
un agent de réchauffage,
dans lequel le second polymère (320) est présent dans un rapport compris entre 5 % en poids de la préforme et 15 % en poids de la préforme, et dans lequel le premier polymère (310) comprend au moins 50 % de matériau recyclé.

10. Préforme selon la revendication 9, dans laquelle le second polymère est présent dans un rapport de 5 % en poids de la préforme et 10 % en poids de la préforme, de préférence dans laquelle le second polymère est présent dans une proportion de 7 % en poids de la préforme.

11. Procédé de fabrication d'un récipient à boisson pour un processus de remplissage à chaud, le procédé comprenant :
le chauffage d'une préforme (50), la préforme comprenant :
un mélange (300) d'un premier polymère (310) et d'un second polymère (320), dans lequel le premier polymère est le polyéthylène téréphtalate, et le second polymère l'un parmi le polyéthylène furanoate ou le polyéthylène naphtalate, dans lequel le mélange comprend au moins 50 % de matériaux recyclés ; et
le soufflage d'un gaz dans la préforme pour former la bouteille (100) selon la revendication 1.

12. Procédé selon la revendication 11, dans lequel le mélange comprend en outre un agent de réchauffage.

13. Procédé selon la revendication 11, dans lequel le mélange comprend au moins 80 % de matériaux recyclés.

14. Procédé selon la revendication 11, comprenant en outre :
le remplissage de la bouteille avec une boisson à une température comprise entre 85 °C et 90 °C ; et le bouchage de la bouteille.
